Europäisches Patentamt

European Patent Office

Office européen des brevets

(11) Numéro de publication : **0 179 711**
**B1**

# FASCICULE DE BREVET EUROPÉEN

(45) Date de publication du fascicule du brevet :
**26.04.89**

(21) Numéro de dépôt : **85401991.6**

(22) Date de dépôt : **14.10.85**

(51) Int. Cl.⁴ : **F 16 D   3/06**, B 62 D   1/18,
B 62 D 33/06

(54) **Accouplement télescopique et son utilisation dans les colonnes de direction de véhicules automobiles.**

(30) Priorité : **24.10.84 FR 8416311**

(43) Date de publication de la demande :
**30.04.86 Bulletin 86/18**

(45) Mention de la délivrance du brevet :
**26.04.89 Bulletin 89/17**

(84) Etats contractants désignés :
**DE GB IT NL SE**

(56) Documents cités :
DE–A– 2 330 642
DE–A– 2 843 935
DE–B– 1 252 013
FR–A– 2 075 805
FR–A– 2 169 475
GB–A– 1 084 163
GB–A– 2 060 137
US–A– 2 937 881

(73) Titulaire : **NACAM Société dite:**
**Route de Blois**
**F-41100 Vendome (FR)**

(72) Inventeur : **Haldric, Bernard**
**15 rue Charles Lindbergh**
**F-41100 Vendome (FR)**
Inventeur : **Benedi, Grégorio**
**1 rue Maréchal Rochambeau**
**F-41100 Vendome (FR)**
Inventeur : **Pretot, Daniel**
**2 rue Henri Dunant**
**F-41100 Vendome (FR)**

(74) Mandataire : **Bressand, Georges et al**
**c/o CABINET LAVOIX 2 Place d'Estienne d'Orves**
**F-75441 Paris Cedex 09 (FR)**

EP 0 179 711 B1

## Description

La présente invention se rapporte aux accouplements télescopiques et plus particulièrement à ceux destinés à être utilisés dans les colonnes de direction de véhicules automobiles.

Un certain nombre de véhicules automobiles et plus particulièrement les véhicules du type Poids Lourds, sont munis de cabines basculantes. Dans la plupart des cas, l'axe d'articulation de la cabine n'est pas confondu avec l'axe d'articulation de l'un des cardans de la colonne de direction. Ceci implique un allongement ou un raccourcissement de la colonne de direction et impose donc l'utilisation d'un accouplement télescopique dans la colonne de direction.

On trouve également ce type d'accouplement dans les colonnes de direction de véhicules dotés de systèmes de réglage axial de la position du volant ou dont la cabine est montée sur suspension, ce qui entraîne un déplacement relatif de la cabine par rapport au châssis.

Les accouplements télescopiques utilisés dans ce type d'applications doivent assurer une transmission d'un mouvement de rotation, par exemple d'un volant à un pignon d'entrée d'un boîtier de direction, avec un jeu nul. De plus, l'effort axial permettant d'obtenir un coulissement, c'est à dire un allongement ou un raccourcissement de l'accouplement télescopique, doit être le plus faible possible.

Il existe dans l'état de la technique, deux types d'accouplements télescopiques utilisés dans les colonnes de direction :

— d'une part, les accouplements à entraînement par cannelures ou sections prismatiques qui ont l'inconvénient de ne pas satisfaire les conditions précitées, à savoir, la transmission du mouvement de rotation avec un jeu nul et le coulissement avec un effort le plus faible possible. En effet, si l'on veut que l'effort pour obtenir un coulissement soit le plus faible possible, la structure de ce type d'accouplement impose de laisser subsister un certain jeu, et

— d'autre part, les accouplements à billes qui remplissent les conditions précitées mais qui imposent l'utilisation de matériaux plus coûteux, des temps de réalisation plus importants (traitements thermiques, rectifications) et une plus grande précision de réalisation.

On connaît également d'après le document FR-2 169 475 (révélant les caractéristiques du préambule de la revendication 1) un accouplement télescopique à galets sphériques et son application aux systèmes de transmission. Dans cet accouplement, les galets sont montés à rotation sur des tourillons régulièrement espacés autour d'un moyeu dont ils sont solidaires.

En effet, cet accouplement télescopique est caractérisé en ce qu'il comprend un fourreau présentant trois gorges réparties transversalement à 120° autour de l'axe de celui-ci, et s'étendant dans le sens longitudinal parallèlement audit axe. Chaque gorge comporte une paire de chemins de roulement, de section transversale sensiblement circulaire, disposés en vis à vis et symétriquement par rapport à l'axe longitudinal respectif de chaque gorge.

Cet accouplement télescopique comprend également un arbre longitudinal logé à l'intérieur du fourreau coaxialement à celui-ci, trois tourillons transversaux solidaires dudit arbre longitudinal disposés radialement à 120° autour de ce dernier et dont l'axe transversal correspond respectivement à celui des trois gorges, et trois galets sphériques, chacun desdits galets étant monté à rotation sur un tourillon et roulant librement sur et retenu radialement par lesdits chemins de roulement.

Le document DE-2 843 935 décrit un arbre de transmission télescopique comportant un organe intérieur monté à coulissement dans un fourreau, dans lequel des éléments destinés à transmettre le couple sont maintenus dans des logements transversaux de l'arbre intérieur, perpendiculairement à l'axe de rotation et dans des rainures longitudinales du fourreau. Les éléments de transmission du couple sont constitués par des galets, au moins deux de ces galets étant superposés radialement et reçus dans un logement transversal.

Le but de l'invention est de proposer un accouplement de conception simple, donc de faible coût de réalisation, assurant la transmission d'un mouvement de rotation sans jeu tout en maintenant l'effort axial requis pour un coulissement à un niveau faible.

A cet effet, l'invention comme définie dans la revendication 1 a pour objet un accouplement télescopique comportant un organe intérieur et un organe extérieur ou fourreau montés à coulissement l'un dans l'autre par l'intermédiaire de galets qui sont montés sur des axes solidaires de l'organe intérieur qu'ils traversent et qui sont précontraints entre des pistes de roulement formées dans la paroi interne dudit fourreau.

L'invention sera mieux comprise à l'aide de la description qui va suivre, donnée uniquement à titre d'exemple et faite en se référant aux dessins annexés, sur lesquels :

— la Fig. 1 représente un accouplement selon l'invention associé à deux cardans :

— la Fig. 2 est une coupe transversale à échelle agrandie suivant l'axe des galets de l'accouplement de la Fig. 1 ;

— la Fig. 3 est une coupe suivant la ligne A-A de la Fig. 2 ;

— la Fig. 4 représente une coupe transversale d'un accouplement selon l'invention comportant des moyens d'assemblage des galets ;

— la Fig. 5 est une vue en coupe de l'un des moyens d'assemblage de la Fig. 4 ;

— la Fig. 6 est une vue de face de l'un des moyens d'assemblage de la Fig. 4 ;

— la Fig. 7 est une coupe longitudinale d'un accouplement selon un autre mode de réalisation de l'invention ;

— la Fig. 8 est une coupe suivant l'axe B-B de la Fig. 7 ;

— la Fig. 9 est une coupe transversale d'un accouplement selon un troisième mode de réalisation de l'invention ; et

— Fig. 10 est une représentation de la caractéristique effort de coulissement/couple transmis pour différents types d'accouplements.

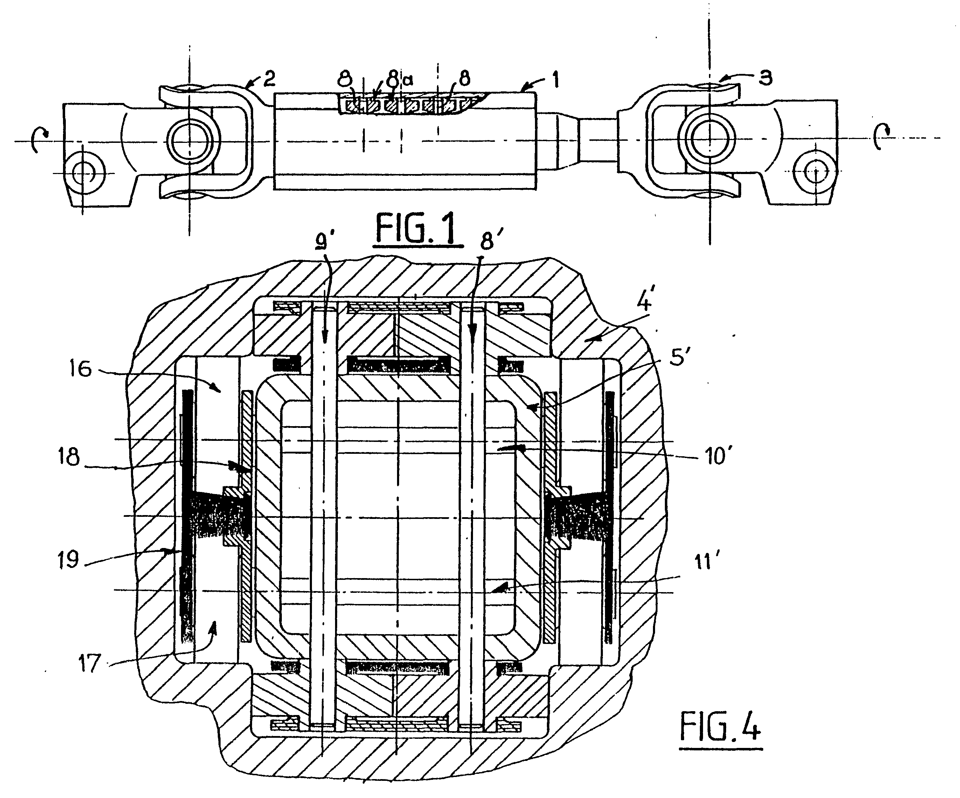

La Fig. 1 représente un accouplement télescopique 1, selon un premier mode de réalisation de l'invention, associé à deux cardans 2 et 3.

Cet accouplement 1 permet par l'intermédiaire des galets 8a portés par les axes 8 que l'on aperçoit dans la partie arrachée de la Fig., de transmettre un mouvement de rotation imprimé à l'un des cardans, à l'autre cardan tout en assurant un allongement ou un raccourcissement de la distance entre cardans.

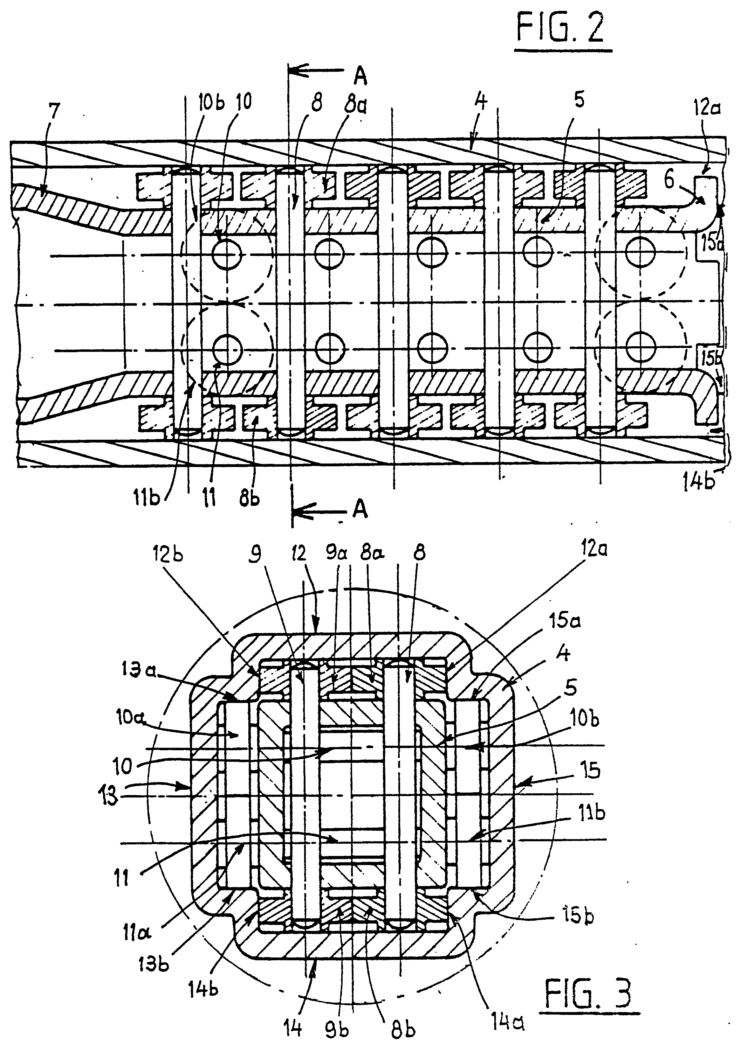

Comme le montre la Fig. 2, l'accouplement est composé d'un organe extérieur ou fourreau 4 et d'un organe intérieur 5 qui sont chacun reliés de manière connue en soi à l'un des cardans 2 et 3 précités. L'organe intérieur 5 présente à l'une de ses extrémités des rebords 6 faisant saillie vers l'extérieur et à l'autre extrémité un évasement 7, ces organes permettant en cas de rupture d'un ou de plusieurs axes d'empêcher les galets de s'échapper et d'assurer ainsi la continuation de la transmission du couple.

Si l'on considère l'accouplement dans la position particulière représentée à la Fig. 2, l'organe intérieur 5 est traversé alternativement par des séries longitudinales d'axes verticaux et d'axes horizontaux.

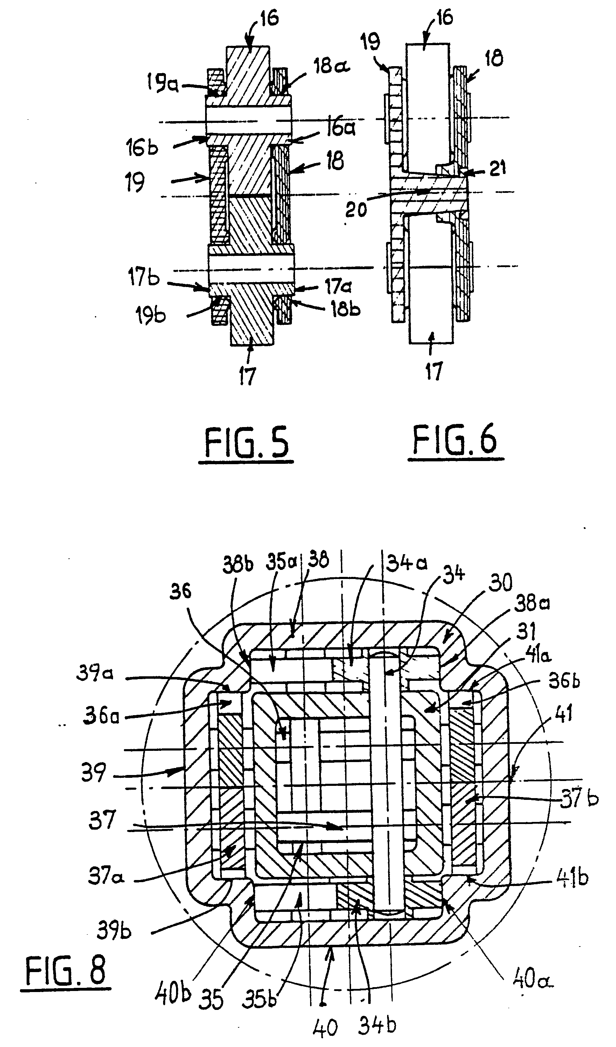

En se référant à la Fig. 3, où l'on retrouve le fourreau 4 et l'organe intérieur 5 qui est, dans ce mode de réalisation, tubulaire de section carrée, on peut voir que cet organe intérieur 5 est traversé par une paire d'axes parallèles et verticaux 8 et 9. Des galets 8a-8b, 9a-9b sont montés à rotation sur les extrémités des axes 8 et 9 respectivement, qui s'étendent au-delà de l'organe intérieur 5.

L'organe intérieur 5 est également traversé par une deuxième paire d'axes parallèles 10 et 11 disposés perpendiculairement et décalés en profondeur par rapport aux axes 8 et 9. Des galets 10a-10b, 11a-11b sont également montés à rotation sur les extrémités des axes 10 et 11 respectivement qui s'étendent au-delà de l'organe intérieur.

Le plan de coupe permettant d'obtenir la Fig. 2, ne fait apparaître sur cette Fig., que la série d'axes 8 verticaux alors que, ainsi qu'on l'a compris, l'organe intérieur 5 est traversé par deux séries d'axes parallèles 8 et 9 verticaux et deux séries d'axes parallèles 10 et 11 horizontaux.

Les axes verticaux et les axes horizontaux sont décalés longitudinalement comme on peut le voir sur la Fig. 2, de sorte qu'ils traversent l'organe intérieur sans contact et qu'il subsiste un certain jeu entre les galets portés par les axes successifs d'une série longitudinale. En effet, seuls les galets montés dans un même plan transversal de l'accouplement télescopique sont montés précontraints.

On constate sur la Fig. 3, que le fourreau 4 présente quatre chemins de roulement 12, 13, 14 et 15 décalés de 90°, formés dans sa surface interne.

Ces chemins de roulement présentent des parois latérales formant pistes de roulement 12a, 12b, 13a, 13b, 14a, 14b et 15a, 15b entre lesquelles est disposée une paire de galets, par exemple 8a, 9a entre les pistes 12a, 12b, portés par les deux axes débouchant dans ledit chemin de roulement. Ces deux galets seront dénommés ci-après « galets correspondants ».

Le plan de montage de ces galets correspondants, c'est à dire, les plans définis par les axes 8-9 et 10-11 sont perpendiculaires aux plans définis par les pistes de roulement.

Les galets correspondants sont montés précontraints entre les pistes de roulement, c'est à dire que la distance séparant les bords des galets devant prendre appui sur les pistes de roulement est supérieure avant montage, à la distance séparant les deux pistes de roulement, par exemple 12a, 12b, formées dans le fourreau 4. On aura compris que cet exemple de disposition pour les galets correspondants 8a-9a s'applique aux autres galets montés de manière analogue dans les autres chemins de roulement.

Selon le cas, le fourreau 4 et/ou les axes portant les galets sont constitués d'un matériau suffisamment élastique de façon à pouvoir se déformer pour permettre le montage des galets dans les chemins de roulement.

On trouve sur la Fig. 4, un accouplement selon l'invention comprenant un fourreau 4' et un organe intérieur 5' traversé par des axes verticaux 8', 9' et horizontaux 10', 11'. Des galets correspondants 16 et 17, sont montés à rotation sur les extrémités de ces axes, comme il a déjà été décrit.

On constate que les galets associés à chaque côté de l'accouplement sont montés entre deux éléments 18 et 19 en matière plastique formant cartouche d'assemblage des galets.

Comme le montre la Fig. 5, les galets comportent des bossages 16a, 16b, 17a, 17b formant moyeux, venant se loger dans des évidements 18a, 18b et 19a, 19b prévus dans les éléments 18 et 19 respectivement. Les galets 16 et 17 s'étendent au-delà des éléments 18 et 19 et l'épaisseur desdits éléments est inférieure à la longueur des bossages des galets.

L'élément 19 comporte des crochets 20 (dont un seul est représenté sur la Fig. 6) venant prendre appui dans des décrochements 21 de l'élément 18 prévus à cet effet, de façon à rendre solidaires les deux éléments et ainsi d'emprisonner les galets.

Le dispositif d'assemblage des galets permet d'opérer un tri parmi les galets de manière à obtenir un entraxe constant. De plus, ce dispositif permet une manipulation et un montage plus aisés des galets.

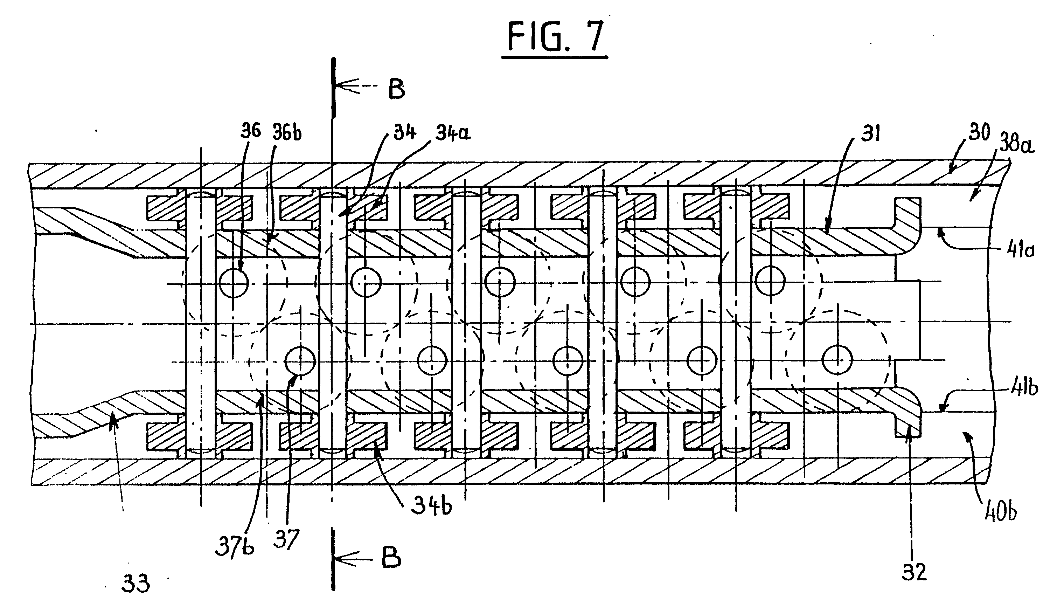

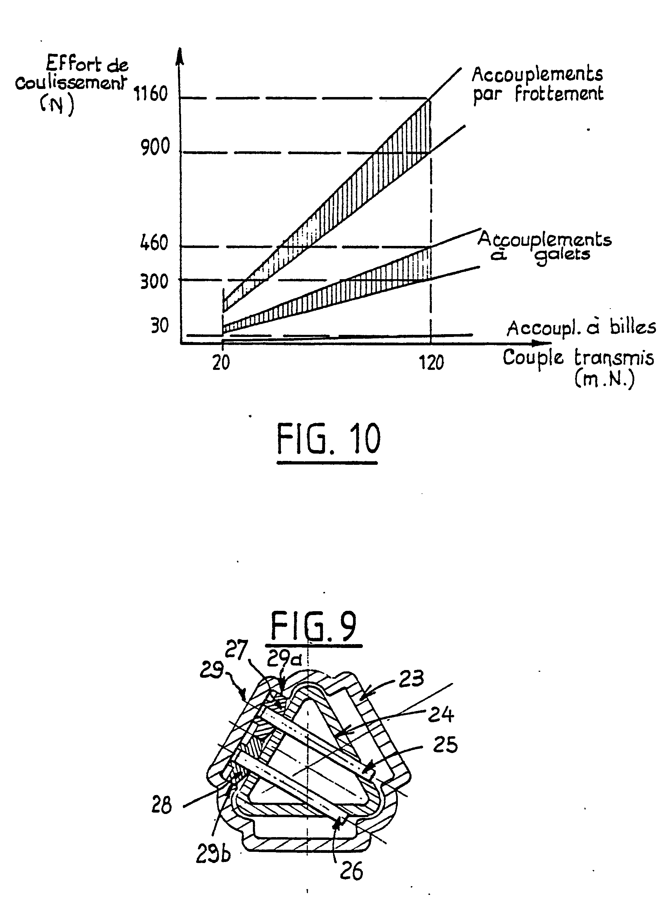

Selon un autre mode de réalisation de l'invention, représenté sur les Fig. 7 et 8, l'accouplement comprend un fourreau 30 et un organe intérieur 31.

L'organe intérieur 31 présente à l'une de ses extrémités des rebords 32 faisant saillie vers l'extérieur et à l'autre extrémité un évasement 33 (Fig. 7).

Comme on peut le constater sur la Fig. 8, cet organe intérieur est traversé par des axes verticaux et parallèles 34 et 35 décalés en profondeur sur les extrémités desquels sont montés à rotation des galets 34a, 34b et 35a, 35b respectivement.

Un axe horizontal 37 sur les extrémités duquel sont montés des galets 37a, 37b traverse l'organe intérieur entre les axes verticaux 34 et 35 perpendiculairement et décalé en profondeur par rapport à l'axe vertical 34.

Un axe horizontal 36 sur les extrémités duquel sont montés des galets 36a et 36b traverse l'organe intérieur perpendiculairement et décalé en profondeur par rapport à l'axe vertical 35.

Le fourreau 30 présente quatre chemins de roulement 38, 39, 40, 41 dont les parois latérales forment pistes de roulement 38a, 38b, 39a, 39b, 40a, 40b, 41a, 41b.

Les galets sont donc montés en quinconce entre les pistes de roulement comme on peut le voir sur la Fig. 7. Les galets montés dans les mêmes chemins de roulement sont montés précontraints entre les pistes de roulement par exemple les galets 36b, 37b entre les pistes de roulement 41a, 41b. Chaque galet prend appui sur deux autres galets, exception faite des galets d'extrémités de chaque face de l'organe intérieur.

Suivant un autre mode de réalisation de l'accouplement selon l'invenvention, représenté sur la Fig. 9, le fourreau 23 comporte trois chemins de roulement décalés de 120°. L'organe intérieur 24 tubulaire de section triangulaire est traversé par trois séries de paires d'axes parallèles, dont une seule 25, 26 est représentée, s'étendant d'une part au-delà de chaque face de l'organe intérieur et d'autre part de chaque côté du sommet opposé à ladite face.

Des galets 27, 28 sont montés sur les extrémités des axes 25, 26 respectivement, s'étendant au-delà de l'organe intérieur 24. Les galets correspondants 27, 28 sont montés précontraints entre les pistes de roulement 29a, 29b du chemin de roulement 29 formé dans la paroi interne du fourreau 23.

Les paires d'axes non représentées sont décalées en profondeur et de 120° successivement.

Le fonctionnement d'un accouplement télescopique selon l'invention est le fonctionnement classique d'un accouplement à savoir que l'on obtient un coulissement de l'organe intérieur par rapport au fourreau et ceci, dans l'accouplement selon l'invention, par l'intermédiaire des galets.

Dans les différents modes de réalisation décrits, le nombre des galets est calculé de façon à obtenir des pressions de contact faibles sur les pistes de roulement. La distance relativement importante entre les galets d'extrémités permet d'obtenir un bon alignement des axes des deux organes de l'accouplement.

L'utilisation de galets permet d'obtenir des surfaces de contact plus importantes qu'en utilisant des billes. Ainsi, les pressions de contact étant plus faibles, il n'est pas nécessaire d'appliquer de traitements spéciaux aux pistes de roulement.

Comme on peut le constater sur la Fig. 10, les accouplements à galets présentent une caractéristique effort de coulissement/couple transmis nettement meilleure que celle des accouplements à entraînement par cannelures ou sections prismatiques, dénommés accouplements par frottement sur cette Fig., mais moins bonne que celle des accouplements à billes. Néanmoins, les accouplements à galets présentent l'avantage d'être d'un coût de fabrication moins élevé que les accouplements à billes.

Les valeurs numériques indiquées ont été relevées sur les accouplements couramment utilisés dans les colonnes de direction de Poids Lourds existants, dans lesquelles les accouplements selon la présente invention trouvent notamment leur application.

## Revendications

1. Accouplement télescopique comportant un fourreau (4 ; 4' ; 23 ; 30) et un organe intérieur (5 ; 5' ; 24 ; 31) montés à coulissement l'un dans l'autre par l'intermédiaire de galets (8a, 9a, 10a, 11a, 8b, 9b, 10b, 11b ; 16, 17 ; 27, 28 ; 34a, 34b, 35a, 35b, 36a, 36b, 37a, 37b), qui sont montés sur des axes (8, 9, 10, 11 ; 8', 9', 10', 11' ; 25, 26 ; 34, 35, 36, 37) solidaires de l'organe intérieur (5 ; 5' ; 24 ; 31) et qui sont précontraints entre des pistes de roulement (12a, 12b ; 29a, 29b) formées dans la paroi interne dudit fourreau caractérisé en ce que lesdits axes solidaires de l'organe intérieur (8, 9, 10, 11 ; 8', 9', 10', 11' ; 25, 26 ; 34, 35, 36, 37) traversent ledit organe intérieur.

2. Accouplement télescopique selon la revendication 1, caractérisé en ce que les galets sont montés par paires (8a-9a, 10a-11a, 8b-9b, 10b-11b ; 16-17 ; 27-28).

3. Accouplement télescopique selon la revendication 2, caractérisé en ce que les plans de montage des paires de galets, c'est à dire les plans définis par les axes portant lesdites paires de galets sont perpendiculaires aux plans définis par les pistes de roulement.

4. Accouplement télescopique selon la revendication 1, caractérisé en ce que les galets (34a, 34b, 35a, 35b, 36a, 36b, 37a, 37b) sont montés en quinconce entre des pistes de roulement (38a, 38b, 39a, 39b, 40a, 40b, 41a, 41b) formées dans la paroi interne dudit fourreau.

5. Accouplement télescopique selon l'une quelconque des revendications précédentes, caractérisé en ce que des moyens d'assemblage sont prévus pour rendre solidaires les galets associés à chaque côté de l'accouplement.

6. Accouplement télescopique selon la revendication 5, caractérisé en ce que lesdits moyens d'assemblage sont constitués par des éléments (18, 19) présentant des évidements (18a, 18b, 19a, 19b) destinés à recevoir des bossages (16a-16b, 17a-17b) formant moyeux des galets, disposés de part et d'autre des galets (16, 17) et en ce que lesdits éléments comportent des moyens coopérant entre eux pour rendre solidaires lesdits éléments.

7. Accouplement télescopique selon la revendication 6, caractérisé en ce que lesdits moyens coopérant entre eux pour rendre solidaires les éléments (18, 19) des moyens d'assemblage sont constitués par des crochets (20) portés par l'un des éléments (19), venant prendre appui dans des décrochements (21) formés dans l'autre élément (18).

8. Accouplement télescopique selon l'une quelconque des revendications précédentes, caractérisé en ce que l'organe intérieur (5 ; 5' ; 31) est de section carrée et en ce que quatre chemins de roulement (12, 13, 14, 15 ; 38, 39, 40, 41) décalés de 90° sont formés dans la paroi interne du fourreau.

9. Accouplement télescopique selon l'une quelconque des revendications 1 à 7, caractérisé en ce que l'organe intérieur (24) est de section triangulaire et en ce que trois chemins de roulement (29) décalés de 120° sont formés dans la paroi interne du fourreau.

10. Accouplement télescopique selon l'une quelconque des revendications précédentes, caractérisé en ce que l'organe intérieur présente à l'une de ses extrémités des rebords (6 ; 32) faisant saillie vers l'extérieur et à l'autre extrémité un évasement (7 ; 33) destinés à retenir les galets en cas de rupture desdits axes.

11. Colonne de direction de véhicule, caractérisée en ce qu'elle comporte un accouplement télescopique suivant l'une quelconque des revendications précédentes.

## Claims

1. Telescopic coupling comprising a sleeve (4 ; 4' ; 23 ; 30) and an internal member (5 ; 5' ; 24 ; 31) mounted to run one inside the other via rollers (8a, 9a, 10a, 11a, 8b, 96, 10b, 11b ; 16, 17 ; 27, 28 ; 34a, 34b, 35a, 35b, 36a, 36b, 37a, 37b), which are mounted on axles (8, 9, 10, 11 ; 8', 9', 10', 11' ; 25, 26 ; 34, 35, 36, 37) connected with the internal member (5 ; 5' ; 24 ; 31) and prestressed between rolling tracks (12a, 12b ; 29a, 29b) formed in the inner wall of said sleeve, characterised in that the axles connected with the internal member (8, 9, 10, 11 ; 8', 9', 10', 11' ; 25, 26 ; 34, 35, 36, 37) pass through said internal member.

2. Telescopic coupling according to claim 1, characterised in that the rollers are mounted in pairs (8a-9a, 10a-11a, 8b-9b, 10b-11b ; 16-17 ; 27-28).

3. Telescopic coupling according to claim 2, characterised in that the mounting planes of the pairs of rollers, namely the planes defined by the axles carrying said pairs of rollers, are perpendicular to the planes defined by the rolling tracks.

4. Telescopic coupling according to claim 1, characterised in that the rollers (34a, 34b, 35a, 35b, 36a, 36b, 37a, 37b) are mounted in staggered rows between the rolling tracks (38a, 38b, 39a, 39b, 40a, 40b, 41a, 41b) formed in the inner wall of said sleeve.

5. Telescopic coupling according to any of the preceding claims, characterised in that assembly means are provided for interconnecting the rollers associated on each side of the coupling.

6. Telescopic coupling according to claim 5, characterised in that said assembly means consist of elements (18, 19) provided with recesses (18a, 18b, 19a, 19b) adapted to receive bosses (16a-16b, 17a-17b) forming the hubs of the rollers, arranged on each side of the rollers (16, 17), and in that said elements comprise means cooperating with one another in order to interconnect said elements.

7. Telescopic coupling according to claim 6, characterised in that said means cooperating with one another in order to interconnect the elements (18, 19) of the assembly means consist of hooked members (20) carried by one of the elements (19) which engage in recesses (21) formed in the other element (18).

8. Telescopic coupling according to any of the preceding claims, characterised in that the internal member (5 ; 5' ; 31) is square in cross-section and four rolling tracks (12, 13, 14, 15 ; 38, 39, 40, 41) offset by 90° are formed in the inner wall of the sleeve.

9. Telescopic coupling according to any of claims 1 to 7, characterised in that the internal member (24) is of triangular cross-section and in that three rolling tracks (29) offset by 120° are formed in the inner wall of the sleeve.

10. Telescopic coupling according to any of the preceding claims, characterised in that the internal member has, at one end, edges (6 ; 32) projecting outwardly and at the other end a widened portion (7 ; 33) adapted to hold the rollers in the event of breakage of the axles.

11. Vehicle steering column, characterised in that it comprises a telescopic coupling as claimed in any of the preceding claims.

## Patentansprüche

1. Teleskopische Kupplung mit einer Hülse (4 ; 4' ; 23 ; 30) und einem inneren Teil (5 ; 5' ; 24 ; 31), die über Rollen (8a, 9a, 10a, 11a, 8b, 9b, 10b, 11b ; 16, 17 ; 27, 28 ; 34a, 34b, 35a, 35b, 36a, 36b, 37a, 37b) ineinander verschieblich angebracht sind, welche auf mit dem inneren Teil (5 ; 5' ; 24 ; 31) festverbundenen Achsen angebracht sind und welche zwischen Rollbahnen (12a, 12b ; 29a, 29b) vorgespannt sind, die in der Innenwand der Hülse ausgebildet sind, dadurch gekennzeichnet, daß die mit dem inneren Teil (8, 9, 10, 11 ; 8', 9', 10', 11' ; 25, 26 ; 34, 35, 36, 37) festverbundenen Achsen das innere Teil durchsetzen.

2. Teleskopische Kupplung nach Anspruch 1, dadurch gekennzeichnet, daß die Rollen in Paaren (8a-9a, 10a-11a, 8b-9b, 10b-11b ; 16-17 ; 27-28) angebracht sind.

3. Teleskopische Kupplung nach Anspruch 2, dadurch gekennzeichnet, daß die Montageebenen der Rollenpaare, d. h. die Ebenen, die durch die die Rollenpaare tragenden Achsen definiert sind, senkrecht zu den durch die Rollbahnen definierten Ebenen sind.

4. Teleskopische Kupplung nach Anspruch 1, dadurch gekennzeichnet, daß die Rollen (34a, 34b, 35a, 35b, 36a, 36b, 37a, 37b) in Quincunxanordnung zwischen in der Innenwand der Hülse ausgebildeten Rollbahnen (38a, 38b, 39a, 39b, 40a, 40b, 41a, 41b) angebracht sind.

5. Teleskopische Kupplung nach irgendeinem der vorstehenden Ansprüche, dadurch gekennzeichnet, daß Verbindungsmittel zur festen Verbindung der jeder Seite der Kupplung zugeordneten Rollen vorgesehen sind.

6. Teleskopische Kupplung nach Anspruch 5, dadurch gekennzeichnet, daß die Verbindungsmittel durch Elemente (18, 19) gebildet sind, welche Ausnehmungen (18a, 18b, 19a, 19b) aufweisen, die zur Aufnahme von Rollennaben bildenden Wulsten (16a-16b, 17a-17b) bestimmt sind, die beiderseits der Rollen (16, 17) angeordnet sind, und daß die Elemente Mittel aufweisen, die untereinander die Elemente fest verbindend zusammenwirken.

7. Teleskopische Kupplung nach Anspruch 6, dadurch gekennzeichnet, daß die untereinander die Elemente (18, 19) der Verbindungsmittel fest verbindend zusammenwirkenden Mittel durch von einem der Elemente (19) getragene Haken (20) gebildet sind, welche in im anderen Element (18) ausgebildete Aushakungen (21) eingreifen.

8. Teleskopische Kupplung nach irgendeinem der vorstehenden Ansprüche, dadurch gekennzeichnet, daß das innere Teil (5 ; 5' ; 31) von viereckigem Querschnitt ist und daß vier um 90° versetzte Rollbahnen (12, 13, 14, 15 ; 38, 39, 40, 41) in der Innenwand der Hülse ausgebildet sind.

9. Teleskopische Kupplung nach irgendeinem der Ansprüche 1 bis 7, dadurch gekennzeichnet, daß das innere Teil (24) von dreieckigem Querschnitt ist und daß drei um 120° versetzte Rollbahnen (29) in der Innenwand der Hülse ausgebildet sind.

10. Teleskopische Kupplung nach irgendeinem der vorstehenden Ansprüche, dadurch gekennzeichnet, daß das innere Teil an einem seiner Enden nach außen vorspringende Ränder (6 ; 32) und am anderen Ende eine Ausweitung (7 ; 33) zum Rückhalten der Rollen im Falle eines Bruches der Achsen aufweist.

11. Fahrzeug-Lenksäule, dadurch gekennzeichnet, daß sie eine teleskopische Kupplung nach irgendeinem der vorstehenden Ansprüche aufweist.

FIG.1

FIG.4

EP 0 179 711 B1

FIG. 2

FIG. 3

EP 0 179 711 B1

FIG.5    FIG.6

FIG.8

3

# FIG. 7

EP 0 179 711 B1

Effort de
Coulissement
(N)

1160

900

460

300

30

Accouplements
par frottement

Accouplements
à galets

Accoupl. à billes

20                    120

Couple transmis
(m.N.)

FIG. 10

FIG. 9

27
29a
29
23
24
25
28
29b
26

5